# EUROPÄISCHE PATENTSCHRIFT

(11) **EP 1 644 655 B1**
(45) Veröffentlichungstag und Bekanntmachung des Hinweises auf die Patenterteilung: **25.11.2009**
(21) Anmeldenummer: 04740584.0
(22) Anmeldetag: 02.07.2004
(51) Int. Cl.: F16K 17/12, G21C 15/18

(54) **DRUCKARMATUR**
PRESSURE FITTING
APPAREIL DE PRESSION

(30) Priorität: 02.07.2003 DE 10329927
(43) Veröffentlichungstag der Anmeldung: 12.04.2006
(73) Patentinhaber: AREVA NP GmbH, 91052 Erlangen (DE)
(72) Erfinder: BRETTSCHUH, Werner, 65812 Bad Soden (DE); CONRADS, Hermann-Josef, 91074 Herzogenaur (DE); LAURER, Erwin, 91096 Möhrendorf (DE)
(74) Vertreter: Walkenhorst, Andreas
(86) Internationale Anmeldenummer: PCT/EP2004/007230
(87) Internationale Veröffentlichungsnummer: WO 2005/003608

(56) Entgegenhaltungen:
- EP-A- 0 531 262
- EP-B- 0 752 079
- DE-A- 4 301 972
- DE-B- 1 231 077
- GB-A- 409 545

## Beschreibung

Die Erfindung bezieht sich auf eine Kerntechnische Anlage mit einer Druckarmatur zum Einsatz als Flutventil wobei die Druckarmatur ein einem in einem Gehäuse relativ zu diesem verschiebbar angeordneten, mit einem Ventilkegel versehenen Schließelement, umfasst gemäß dem Oberbegriff des Anspruchs 1.

Eine Druckarmatur kann in vielerlei Anwendungen bedeutsam sein, bei denen Behältnisse oder Leitungen unter Druck stehen, insbesondere zur Drucksteuerung und zur Druckentlastung. Dabei kann eine Drucksteuerung oder Druckentlastung sowohl im normalen Betrieb einer Anlage als auch als Sicherheitsmaßnahme vorgesehen sein. Unter Druck stehende Komponenten, insbesondere Druckbehälter, sind üblicherweise gegen unerwünschten Überdruck abzusichern und mit einer entsprechenden Einrichtung zur Druckentlastung im Anforderungsfall zu versehen.

Die Druckarmatur ermöglicht im Anforderungsfall durch eine rechtzeitige und sichere Druckentlastung die Durchführung notwendiger Sicherheitsmaßnahmen. Bei Störfällen, die mit einem Kühlmittelverlust einhergehen, kann es in einer Kernkraftwerksanlage zu einer Verringerung des Füllstandes im Reaktordruckbehälter kommen. Sinkt der Füllstand ab, wird aus Sicherheitsgründen zur Vermeidung eines gefährlichen Überdrucks im Reaktordruckbehälter dessen Druckentlastung durch das Öffnen der Sicherheits- und Entlastungsventile eingeleitet. Daraufhin fällt der Druck im Reaktordruckbehälter verhältnismäßig schnell ab. Hat er einen Grenzdruck, beispielsweise 10 bar, unterschritten, so übernehmen üblicherweise die aktiven Kühlsysteme der Kernkraftwerksanlage die Wärmeabfuhr und anschließend das Anheben des Füllstandes im Reaktordruckbehälter. Stehen die aktiven Kühlsysteme jedoch nicht zur Verfügung, soll die Flutung des Reaktorkerns durch ein passives Flutsystem erfolgen.

Aus der EP 752 079 B1 ist eine Druckabsicherungs- und Druckentlastungsarmatur bekannt, die einerseits als Einrichtung gegen Drucküberschreitung bei Erreichen eines Grenzdruckes (z. B. 180 bar) unter Zuhilfenahme eines federbelasteten Steuerventils (passiv) öffnet und bei abgesenktem Druck (z. B. 150 bar) unter Zuhilfenahme des gleichen Grenzventils wieder schließt und andererseits als Einrichtung zur Druckabsenkung (bis hin zum drucklosen Zustand des Systems) unter Zuhilfenahme eines mit Fremdenergie (z. B. motorisch) betriebenen Steuerventils ebenfalls bei hohem Druck (aktiv) öffnet und hierbei eine Greifvorrichtung betätigt, die ein Schließen der Armatur, selbst bei gänzlich abgebautem Systemdruck, verhindert. Auch das Eigengewicht der beweglichen Armatureneinbauten und die in Schließrichtung der Armatur wirkende Ventilfeder können dank der erwähnten Greifvorrichtung ein Wieder-Schließen der Armatur nicht herbeiführen.

Die Betätigung der Greifvorrichtung erfolgt aktiv. Zum Einsatz in der Flutleitung einer Kernkraftwerksanlage ist dagegen eine Druckarmatur wünschenswert, die ausschließlich passiv arbeitet, um ein Versagen der Druckarmatur im Anforderungsfall ausschließen und eine inhärente Sicherheit der Einrichtung gewährleisten zu können.

Der Erfindung liegt daher die Aufgabe zugrunde, eine Kerntechnische Anlage mit einer Druckarmatur anzugeben, deren Ventil im Anforderungsfall ausschließlich passiv arbeitet und nicht auf mechanische oder leittechnische Hilfseinrichtungen angewiesen ist.

Diese Aufgabe wird erfindungsgemäß gelöst durch die Merkmale des Anspruchs 1. Dabei ist im Gehäuse ein dem Ventilkegel zugeordneter Ventilsitz zwischen einer Hochdruckkammer und einer Vorlagekammer angeordnet, wobei das Eigengewicht des Schließelements derart gewählt ist, dass die auf das Schließelement wirkende Gesamtkraft gleich der bei einer vorgegebenen Auslösedruckdifferenz zwischen Hochdruckkammer und Vorlagekammer auf den Ventilkegel einwirkenden Druckkraft ist. Die Gesamtkraft ist dabei gegeben durch die auf das Schließelement wirkende Gewichtskraft.

Die Erfindung geht dabei von der Überlegung aus, dass bei einer ausschließlich passiv arbeitenden Druckarmatur unter Verzicht auf mechanische oder leittechnische Hilfseinrichtungen ein zuverlässiger Schaltbetrieb unter gezielter Nutzung der durch das Eigengewicht der Ventilbauteile hervorgerufenen Gewichtskraft möglich ist. Um diese Gesamtkraft, insbesondere des Schließelements, geeignet nutzen zu können, sollte die Druckarmatur als mediengesteuerte Armatur ausgeführt sein, bei der im Normalzustand der abgesicherten Anlage aufgrund der dort herrschenden Druckverhältnisse der Ventilkegel zuverlässig im Ventilsitz gehalten wird. Dazu ist der Ventilsitz zwischen einer Hochdruckkammer und einer Vorlagekammer angeordnet, so dass bei in der Hochdruckkammer vorliegendem hohem Mediendruck der Ventilkegel aufgrund der Druckdifferenz in seinem Ventilsitz gehalten wird. Eine passive Auslösung des Öffnungsvorgangs ist sodann erreichbar, indem die Hochdruckkammer unterhalb der Vorlagekammer angeordnet ist, so dass die durch die Druckdifferenz zwischen Hochdruckkammer und Vorlagekammer auf den im Ventilsitz befindlichen Ventilkegel ausgeübte Druckkraft der Gewichts- oder Gravitationskraft , entgegengesetzt gerichtet ist. Der Ansprech- oder Auslösedruck für die Druckarmatur ist dabei einstellbar, indem das Eigengewicht des Schließelements derart gewählt ist, dass beim vorgegebenen Ansprechdruck, also bei der vorgegebenen Auslösedruckdifferenz zwischen Hochdruckkammer und Vorlagekammer, die infolge dieser Druckdifferenz auf den Ventilkegel einwirkende Druckkraft die Gewichtskraft des Schließelements gerade noch kompensieren kann.

Zweckmäßigerweise sind die Bauteile des Ventils und des Steuerventils so ausgelegt und ihr Gewicht so bemessen, dass die das Öffnen des Ventils bewirkende Druckdifferenz zwischen Ein- und Ausströmseite der Druckarmatur 2,5 bar beträgt. Üblicherweise sind nämlich die aktiven Kühlsysteme einer Kernkraftwerksanlage so ausgelegt, dass sie während eines Störfalles mit Kühlmittelverlust bei einer Druckdifferenz von etwa 10 bar in den Reaktordruckbehälter eingreifen und die Abfuhr der Wärme aus dem Reaktordruckbehälter übernehmen. Erst wenn diese versagen und der Druck im Reaktordruckbehälter noch weiter absinkt, soll die Druckarmatur öffnen und zuerst die Druckentlastung weiter unterstützen, um dann bei Druckausgleich die passive Zuleitung des Reaktordruckbehälters zu gewährleisten.

Vorteilhafterweise ist der Ventilkegel dabei derart ausgestaltet, dass er in geschlossenem Zustand der Druckarmatur besonders innig am Ventilsitz anliegt. Dazu ist der Ventilkegel vorteilhafterweise konisch und/oder sich zuspitzend ausgeführt. Des Weiteren ist der Ventilkegel darüber hinaus vorteilhafterweise derart ausgestaltet, dass auch beim Ansprechen der Druckarmatur unter Druckdifferenz ein vergleichsweise gleichmäßiger und somit beherrschbarer Öffnungsvorgang ergibt. Um dies zu erreichen, ist der Ventilkegel vorteilhafterweise in seiner Außenkontur derart an die Innenkonturierung des Gehäuses im Bereich des Ventilsitzes angepaßt, dass sich bei einer Hubbewegung des Ventilkegels aus dem Ventilsitz heraus der Öffnungsquerschnitt des entstehenden Ringspalts zwischen Ventilkegel und Ventilsitz annähernd proportional zum Ventilhub vergrößert. Damit ist erreicht, dass bei zunehmender Öffnung des Ventils der Überströmquerschnitt für das Medium von der Hochdruckkammer in die Vorlagekammer zunehmend vergrößert wird, so dass der Medienaustausch mit zunehmender Öffnung des Ventils immer weiter erleichtert wird.

Durch eine derartige Anordnung und insbesondere auch durch die Anordnung der Hochdruckkammer unterhalb der Vorlagekammer wird zudem erreicht, dass durch den beim Öffnen des Ventils einsetzenden Druckausgleich zwischen Hochdruckkammer und Vorlagekammer der Druck in der Vorlagekammer ansteigt, so dass über die Gewichtskraft des Schließelements hinaus noch weitere, am Ventilkegel angreifende Kraftkomponenten in Richtung der Gewichtskraft des Schließelements hinzukommen, die das weitere Öffnen der Druckarmatur noch weiter begünstigen.

Ein besonders ausgewogenes Betriebsverhalten unter weitgehender Vermeidung schlagartiger Öffnungsvorgänge ist erreichbar, indem die Druckarmatur mit einem Dämpfungsmechanismus versehen ist. Dazu umfasst das Schließelement vorteilhafterweise einen an einer Führungsstange angeordneten, in einem Steuerraum geführten Steuerkolben, der den Steuerraum in einen Dämpfungsraum und in einen Entlastungsraum teilt. Als Entlastungsraum wird dabei vorliegend derjenige Teil des Steuerraums bezeichnet, der sich unterhalb des Steuerkolbens befindet, wohingegen als Dämpfungsraum derjenige Teil des Steuerraums bezeichnet wird, der sich oberhalb des Steuerkolbens befindet. Im geschlossenen Zustand der Druckarmatur befindet sich der über die Führungsstange mit dem Ventilkegel verbundene Steuerkolben an seinem oberen Endpunkt, so dass in diesem Zustand das Volumen des Dämpfungsraums vergleichsweise klein und das Volumen des Entlastungsraums vergleichsweise groß ist. Beim Öffnen der Druckarmatur, bei dem sich der Ventilkegel angetrieben durch die Gewichtskraft des Schließelements nach unten bewegt, wird der Steuerkolben über die Führungsstange ebenfalls abwärts bewegt, so dass sich im Zuge dieser Bewegung der Dämpfungsraum vergrößert und der Entlastungsraum verkleinert.

Durch eine geeignete Dimensionierung von Dämpfungsraum und Entlastungsraum ist dabei auf besonders einfache Weise die Öffnungscharakteristik der Druckarmatur modifizierbar. Vorteilhafterweise kommuniziert dabei der Entlastungsraum medienseitig über einen den Steuerkolben umgebenden Ringspalt und/oder über eine Anzahl von Überströmkanälen mit dem Dämpfungsraum, so dass beim Öffnen der Druckarmatur ein Überströmen des Mediums vom Entlastungsraum in den Dämpfungsraum hinein möglich ist. Die Geschwindigkeit und das Ausmaß dieses Überströmens sind dabei durch eine geeignete Dimensionierung des Ringspalts bzw. der Überströmkanäle modifizierbar, so dass die hierdurch erreichte Dämpfungscharakteristik unmittelbar eingestellt werden kann.

In weiterer vorteilhafter Ausgestaltung kann die Druckarmatur mit einem passiven, vorzugsweise gewichtsbelasteten Flutsteuerventil versehen sein, so dass die Ansteuerung des Öffnungsvorgangs nicht notwendigerweise unmittelbar in der eigentlichen Druckarmatur, sondern über das Flutsteuerventil erfolgen kann. Ein besonders geeigneter Ansatzpunkt für die Anbringung des Steuerventils kann dabei der Entlastungsraum der Druckarmatur sein, da durch bedarfsweise Abführung von Medium aus dem Entlastungsraum auf besonders einfache Weise in das Kräftegleichgewicht an der Druckarmatur eingegriffen und diese somit gezielt zum Auslösen gebracht werden kann. Dazu ist der Entlastungsraum vorteilhafterweise mit einer Entlastungsleitung verbunden, in die ein Steuerventil geschaltet ist.

Die Druckarmatur wird eingesetzt in der Art eines passiven Bauteils zum Einsatz in einer für besonders hohe Sicherheitsstandards ausgelegten kerntechnischen Anlage . Gerade für einen derartigen Anwendungsfall ist als Auslösedruckdifferenz in vorteilhafter Ausgestaltung eine Druckdifferenz zwischen Hochdruckkammer und Vorlagekammer von vorteilhafterweise etwa 2,5 bar vorgegeben.

Zum genannten Einsatzzweck ist die Hochdruckkammer der Druckarmatur mit dem Reaktordruckbehälter einer kerntechnischen Anlage verbunden. In zusätzlicher oder alternativer vorteilhafter Ausgestaltung ist die Vorlagekammer dabei mit einem Flutungssystem verbunden. In dieser Ausgestaltung wird somit der Ventilkegel im Ventilsitz festgehalten, solange im Reaktordruckbehälter der kerntechnischen Anlage ausreichend hoher Druck vorliegt. Falls der Druck im Reaktordruckbehälter jedoch unter einen vorgegebenen Grenzwert fällt, bei dem die über den Druck auf den Ventilkegel ausgeübte Druckkraft nicht mehr ausreicht, die Gewichtskraft des Schließelements zu kompensieren, so öffnet die Druckarmatur, und nach dem endgültigen Druckausgleich kann der Zustrom von Flutmedium aus einem Vorhaltebecken in den Reaktordruckbehälter hinein erfolgen.

Aufgrund ihrer besonders geringen Ausfallwahrscheinlichkeit und Anfälligkeit wird die Druckarmatur in der Flutleitung einer Kernkraftwerksanlage eingesetzt.

Die Vorteile der Erfindung bestehen insbesondere darin, dass durch die gezielte Nutzung der auf das Schließelement wirkenden Schwerkraft zum Öffnen der Druckarmatur ein vollständig passives, eigenmedienbetätigtes System bereitstellbar ist, das aufgrund der geringen Anzahl der notwendigen Komponenten eine besonders hohe Zuverlässigkeit und Ausfallsicherheit aufweist. Darüber hinaus ist sichergestellt, dass die Druckarmatur nach einem Öffnungsvorgang in der geöffneten Stellung ("Auf"-Stellung) verbleibt, so dass auch bei wechselnden Druckverhältnissen nach der Auslösung des Öffnungsvorgangs der Status der Druckarmatur unverändert bleibt. Ein Wiederschließen der Druckarmatur ist dabei lediglich durch gezielten Eingriff von außen, z.B. bei Funktionsprüfungen, möglich, der bedarfsweise und situationsangepasst erfolgen kann. Durch das passive Öffnen und das anschließende Offenbleiben der Druckarmatur ist insbesondere die Beherrschung eines Störfalls mit Kühlmittelverlust in einer kerntechnischen Anlage möglich. Die Druckarmatur ist somit in besonderem Maße zum Einsatz in einer für höchste Sicherheitsansprüche ausgelegten kerntechnischen Anlage geeignet.

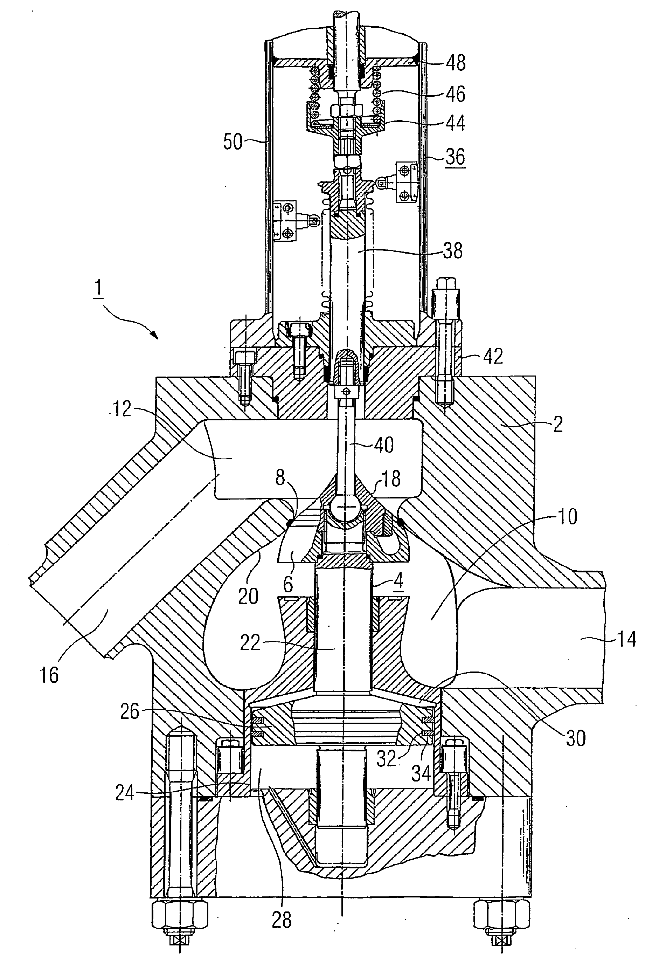

Ein Ausführungsbeispiel der Erfindung wird anhand einer Zeichnung näher erläutert. Darin zeigt die Figur eine Druckarmatur.

Die Druckarmatur 1 gemäß der Figur ist zum Einsatz als Flutventil in einer kerntechnischen Anlage vorgesehen. Sie umfasst ein gegebenenfalls mehrteilig ausgeführtes Gehäuse 2, in dem ein Schließelement 4 verschiebbar angeordnet ist. Das Schließelement 4 umfasst einen Ventilkegel 6, der in der in der Figur gezeigten geschlossenen Stellung der Druckarmatur 1 an einem Ventilsitz 8 innig anliegt. Der Ventilsitz 8 ist dabei innerhalb des Gehäuses 2 zwischen einer Hochdruckkammer 10 und einer Vorlagekammer 12 angeordnet.

Die Hochdruckkammer 10 ist über eine Medienleitung 14 mit dem nicht näher dargestellten Reaktordruckbehälter der kerntechnischen Anlage verbunden, so dass in der Hochdruckkammer 10 näherungsweise der im Reaktordruckbehälter herrschende Druck vorliegt. Die Vorlagekammer 12 ist hingegen über eine Flutleitung 16 mit einem nicht näher dargestellten Vorlagebehälter für ein Flutmedium verbunden. In der Vorlagekammer 12 herrscht somit näherungsweise der Druck des Flutungssystems der kerntechnischen Anlage, also in etwa 7m Wassersäule. In der in der Figur dargestellten geschlossenen Stellung der Druckarmatur 1 übersteigt somit der Druck in der Hochdruckkammer 10 den Druck in der Vörlagekammer 12 erheblich, so dass der Ventilkegel 6 aufgrund der Druckdifferenz durch die daraus resultierende, auf ihn wirkende Druckkraft fest in den Ventilsitz 8 gepresst wird.

Die Druckarmatur 1 ist als passives System unter konsequentem Verzicht auf die Nutzung mechanischer oder leittechnischer Hilfseinrichtungen ausgelegt. Für ein sicheres Ansprechen der Druckarmatur 1 im Auslösefall ist daher die gezielte Nutzung der Schwer- oder Gravitationskraft, vorgesehen. Um dies zu ermöglichen, ist die Hochdruckkammer 10 unterhalb der Vorlagekammer 12 angeordnet, so dass die infolge der Druckdifferenz auf den Ventilkegel 6 wirkende resultierende Druckkraft nach oben und somit entgegen der Schwerkraft gerichtet ist. Um im Auslösefall ein zuverlässiges Ansprechen der Druckarmatur 1 sicherzustellen, ist das Schließelement 4 hinsichtlich seines Eigengewichts derart dimensioniert, dass die auf das Schließelement 4 wirkende Gewichtskraft gleich der im Auslösefall durch die Druckdifferenz zwischen Hochdruckkammer 10 und Vorlagekammer 12 auf den Ventilkegel 6 einwirkenden Druckkraft ist. Im Ausführungsbeispiel ist für die Druckarmatur 1 eine Ansprech- oder Auslösedruckdifferenz zwischen Hochdruckkammer 10 und Vorlagekammer 12 von etwa 2,5 bar gewählt.

Darüber hinaus ist die Druckarmatur 1 für ein vergleichsweise stetiges und somit gut beherrschbares Öffnungsverhalten unter Vermeidung abrupter oder schlagartiger Öffnungsvorgänge ausgelegt. Um dies zu ermöglichen, ist die Außenkontur 18 des Ventilkegels 6 derart an die Innenkonturierung 20 des Gehäuses 2 im Bereich des Ventilsitzes 8 angepasst, dass sich mit zunehmendem Ventilhub beim Entfernen des Ventilkegels 6 aus dem Ventilsitz 8 ein in seinem Öffnungsquerschnitt proportional mit dem Ventilhub wachsender Ringspalt zwischen dem Ventilkegel 6 und dem Ventilsitz 8 ergibt.

Um die Öffnungscharakteristik der Druckarmatur 1 noch weiter zu verbessern und insbesondere ein kontrollierbares Öffnen unter Vermeidung zu hoher Belastungen der einzelnen Komponenten zu ermöglichen, ist die Druckarmatur 1 mit einem Dämpfungssystem versehen. Dazu umfasst das Schließelement 4 eine auch den Ventilkegel 6 tragende Führungsstange 22, an der ein in einem Steuerraum 24 geführter Steuerkolben 26 angeordnet ist. Der Steuerkolben 26 teilt dabei den Steuerraum 24 in einen unterhalb des Steuerkolbens 26 befindlichen Entlastungsraum 28 und in einen oberhalb des Steuerkolbens 26 befindlichen Dämpfungsraum 30 auf. Im Ausführungsbeispiel ist die Druckarmatur 1 im geschlossenen Zustand gezeigt, so dass der Entlastungsraum 28 vergleichsweise großvolumig und der Dämpfungsraum 30 vergleichsweise kleinvolumig ist. Beim Öffnen der Druckarmatur 1 verschiebt sich jedoch der Steuerkolben 26 gemeinsam mit dem Ventilkegel 6 nach unten, so dass sich der Entlastungsraum zunehmend verkleinert und sich der Dämpfungsraum 30 zunehmend vergrößert. Der Entlastungsraum 28 ist dabei über einen den Steuerkolben 26 umgebenden Ringspalt 32 und bedarfsweise noch über nicht dargestellte Überströmkanäle mit dem Dämpfungsraum 30 verbunden. Somit kann beim Ansprechen der Druckarmatur 1 Medium vom Entlastungsraum 28 in den Dämpfungsraum 30 überströmen. Um dabei die gewünschten Dämpfungseigenschaften einstellen zu können, erfolgt das Überströmen von Medium aus dem Entlastungsraum 28 in den Dämpfungsraum 30 gedrosselt. Für eine derartige Drosselung können beispielsweise den Steuerkolben 26 umschließende ringförmige Kolbenabdichtungen 34 vorgesehen sein, die den zur Verfügung stehenden Überströmquerschnitt begrenzen.

Zum gezielten Schließen der Druckarmatur 1 (z.B. beim Anfahren der kerntechnischen Anlage) wird eine zugeordnete Einrichtung 36 verwendet, die oberhalb des Gehäuses 2 angeordnet ist. Eine Ventilstange 38, die mit dem Schließelement 4 über eine Zugstange 40 verbunden ist, ist druckdicht durch das Gehäuse 2und den oberen Gehäusedeckel 42 geführt. Auf das obere Ende der Ventilstange 38 ist ein Federträger 44 aufgeschraubt. Eine in diesem gelagerte Feder 46 stützt sich an einer Querstrebe 48 der Ventillaterne 50 ab und erzeugt im komprimierten Zustand zusammen mit der Gewichtskraft des Schließelements 4 eine Gegenkraft zu der am Ventilsitz 8 vorhandenen hydraulischen Schließkraft der Druckarmatur.

Reicht der Systemdruck der im Anfahren befindlichen Anlage bzw. die Druckdifferenz am Ventilsitz 8 aus, um die Druckarmatur sicher geschlossen zu halten, dann wird die Einrichtung 36 deaktiviert, so dass im Anforderungsfall das hydraulische Öffnen der Druckarmatur in keiner Weise behindert wird.

Im Ausführungsbeispiel ist die Druckarmatur 1 als eigenständige Armatur gezeigt. Es kann aber auch zusätzlich noch ein nicht dargestelltes Steuerventil zur gezielten Ansteuerung der Druckarmatur 1 vorgesehen sein. In diesem Fall kann insbesondere der Entlastungsraum 28 mit einer Entlastungsleitung verbunden sein, in die das Steuerventil geschaltet ist. Damit ist über das Steuerventil eine gezielte Beeinflussung der Druckverhältnisse im Entlastungsraum 28 möglich, so dass das Kräftegleichgewicht innerhalb der Druckarmatur 1 gezielt verschoben und somit ein Öffnungsvorgang eingeleitet werden kann.

### Bezugszeichenliste

- 1: Druckarmatur
- 2: Gehäuse
- 4: Schließelement
- 6: Ventilkegel
- 8: Ventilsitz
- 10: Hochdruckkammer
- 12: Vorlagekammer
- 14: Medienleitung
- 16: Flutleitung
- 18: Außenkontur
- 20: Innenkonturierung
- 22: Führungsstange
- 24: Steuerraum
- 26: Steuerkolben
- 28: Entlastungsraum
- 30: Dämpfungsraum
- 32: Ringspalt
- 34: Kolbenabdichtung
- 36: Einrichtung
- 38: Ventilstange
- 40: Zugstange
- 42: Gehäusedeckel
- 44: Federträger
- 46: Feder
- 48: Querstrebe
- 50: Ventillaterne

## Patentansprüche

1. Kerntechmische Anlage mit einer Druckarmatur (1) zum Einsatz als Flutventil, wobei die Druckarmatur ein in einem Gehäuse (2) relativ zu diesem verschiebbar angeordneten, mit einem Ventilkegel (6) versehenen Schließelement (4), umfasst wobei im Gehäuse (2) ein dem Ventilkegel (6) zugeordneter Ventilsitz (8) zwischen einer Hochdruckkammer (10) und einer Vorlagekammer (12) angeordnet ist, wobei das Schließelement (4) einen an einer Führungsstange (22) angeordneten, in einem Steuerraum (24) geführten Steuerkolben (26) umfasst, der den Steuerraum (24) in einen Dämpfungsraum (30) und einen Entlastungsraum (28) teilt, und wobei der Entlastungsraum (28) mit einer Entlastungsleitung verbunden ist, in die ein Steuerventil geschaltet ist,
**dadurch gekennzeichnet, dass**
das Eigengewicht des Schließelementes (4) derart gewählt ist, dass der Ventilkegel (6) gegen den Ventilsitz (8) gepresst wird, solange die Druckdifferenz zwischen der Hochdruckkammer (10) und der Vorlagekammer (12) oberhalb eines vorgegebenen Auslösewertes liegt, und dass das Ventil aufgrund des Eigengewichts des Schließelementes (4) selbsttätig öffnet, sobald der Auslösewert unterschritten ist.

2. Kerntechnische Anlage mit einer Druckarmatur (1) nach Anspruch 1, wobei der Ventilkegel (6) der Drukarmatur in seiner Außenkontur derart an die Innenkonturierung (20) des Gehäuses (2) im Bereich des Ventilsitzes (8) angepasst ist, dass sich bei einer Hubbewegung des Ventilkegels (6) aus dem Ventilsitz (8) heraus der Öffnungsquerschnitt des entstehenden Ringspalts zwischen Ventilkegel (6) und Ventilsitz (8) annähernd proportional zum Ventilhub vergrößert.

3. Kerntechnische Anlage mit einer Druckarmatur (1) nach Anspruch 1 oder 2, bei der der Entlastungsraum (28) medienseitig über einen den Steuerkolben (26) umgebenden Ringspalt (32) und/oder über eine Anzahl von Überstromkanälen mit dem Dämpfungsraum (30) kommuniziert.

4. Kerntechnische Anlage mit eines Druckarmatur (1) nach einem der Ansprüche 1 bis 3, bei der die Auslösedruckdifferenz 2, 5 bar beträgt.

5. Kerntechnische Anlage mit eines Druckarmatur (1) nach einem der Ansprüche 1 bis 4, deren Hochdruckkammer (10) mit dem Reaktordruckbehälter der kerntechnischen Anlage verbindbar ist.

6. Kerntechnische Anlage mit eines Druckarmatur (1) nach einem der Ansprüche 1 bis 5, deren Vorlagekammer (12) mit einem Flutungssystem verbindbar ist.

## Claims

1. A nuclear facility having a pressure fitting (1) to be used as a flooding valve, the pressure fitting comprising a closing element (4) provided with a valve cone (6) and arranged in a housing (2) in such a manner that it is displaceable relative thereto, a valve seat (8) associated to the valve cone (6) being arranged in said housing (2) between a high-pressure chamber (10) and a reserve chamber (12), the closing element (4) comprising a control piston (26) arranged on a guide rod (22) and guided in a control chamber (24), said control piston (26) dividing the control chamber (24) into a damping chamber (30) and a relief chamber (28), and the relief chamber (28) being connected with a relief line into which a control valve is inserted,
**characterized in**
**that** the own weight of the closing element (4) is chosen such that the valve cone (6) is pressed against the valve seat (8) as long as the pressure differential between the high-pressure chamber (10) and the reserve chamber (12) exceeds a predetermined release value and that the valve opens automatically, due to the own weight of the closing element (4), as soon as the release value is fallen below.

2. The nuclear facility having a pressure fitting (1) according to claim 1, the outer profile of the valve cone (6) of the pressure fitting being adapted to the inner profile (20) of the housing (2) in the area of the valve seat (8) in such a way that, upon a stroke motion of the valve cone (6) out of the valve seat (8), the opening cross-section of the annular gap originating between valve cone (6) and valve seat (8) increases approximately proportionally to the valve stroke.

3. The nuclear facility having a pressure fitting (1) according to claim 1 or 2, wherein the relief chamber (28), on the medium side, communicates with the damping chamber (30) via an annular gap (32) surrounding the control piston (26) and/or via a number of overflow channels.

4. The nuclear facility having a pressure fitting (1) according to any of claims 1 to 3, wherein the release pressure differential is 2.5 bar.

5. The nuclear facility having a pressure fitting (1) according to any of claims 1 to 4, whose high-pressure chamber (10) can be connected with the reactor pressure vessel of the nuclear facility.

6. The nuclear facility having a pressure fitting (1) according to any of claims 1 to 5, whose reserve chamber (12) can be connected with a flooding system.

## Revendications

1. Installation nucléaire avec un appareil de pression (1) à utiliser comme soupape de noyage, l'appareil de pression comprenant un élément de fermeture (4) prévu d'un cône de soupape (6) et ménagé dans un boîtier (2) de façon déplaçable par rapport à ce dernier, un siège de soupape (8) associé au cône de soupape (6) étant ménagé dans dit boîtier (2) entre une chambre à haute pression (10) et une chambre de réserve (12), l'élément de fermeture (4) comprenant un piston-pilote (26) ménagé sur une tige de guidage (22) et guidé dans une chambre-pilote (24), dit piston-pilote (26) divisant la chambre-pilote (24) dans une chambre d'amortissement (30) et une chambre de décharge (28), et la chambre de décharge (28) étant reliée à une ligne de décharge dans laquelle est insérée une soupape-pilote,
**caractérisée en ce**
**que** le poids propre de l'élément de fermeture (4) est choisi tel que le cône de soupape (6) est pressé contre le siège de soupape (8) tant que le différentiel de pression entre la chambre à haute pression (10) et la chambre de réserve (12) dépasse une valeur de relâchement prédéfinie et en ce que la soupape ouvre automatiquement, en raison du poids propre de l'élément de fermeture (4), aussitôt que la valeur de relâchement est sous-dépassée.

2. Installation nucléaire avec un appareil de pression (1) d'après la revendication 1, le profil extérieur du cône de soupape (6) de l'appareil de pression étant adapté au profil intérieur (20) du boîtier (2) dans la zone du siège de soupape (8) de façon que, lors d'un mouvement de course du cône de soupape (6) hors du siège de soupape (8), la section d'ouverture de l'interstice annulaire se produisant entre le cône de soupape (6) et le siège de soupape (8) augmente approximativement proportionnellement à la course de la soupape.

3. Installation nucléaire avec un appareil de pression (1) d'après la revendication 1 ou 2, dans laquelle la chambre de décharge (28), du côté milieu, communique avec la chambre d'amortissement (30) au moyen d'un interstice annulaire (32) entourant le piston-pilote (26) et/ou au moyen d'un nombre de canaux de débordement.

4. Installation nucléaire avec un appareil de pression (1) d'après l'une quelconque des revendications 1 à 3, dans laquelle le différentiel de pression de relâchement est de 2,5 bar.

5. Installation nucléaire avec un appareil de pression (1) d'après l'une quelconque des revendications 1 à 4, dont la chambre à haute pression (10) peut être reliée à la cuve sous pression du réacteur de l'installation nucléaire.

6. Installation nucléaire avec un appareil de pression (1) d'après l'une quelconque des revendications 1 à 5, dont la chambre de réserve (12) peut être reliée à un système de noyage.
